# EUROPEAN PATENT SPECIFICATION

(11) **EP 1 689 172 B1**
(45) Date of publication and mention of the grant of the patent: **09.03.2016**
(21) Application number: 06010825.5
(22) Date of filing: 04.06.2002
(51) Int. Cl.: H04N 5/222, H04N 5/262

(54) **Interactive video display system**
Interaktives Video-Anzeigesystem
Système d'affichage vidéo interactif

(30) Priority: 05.06.2001 US 296189 P; 28.05.2002 US 160217
(43) Date of publication of application: 09.08.2006
(62) Divisional of application: 02739710.8
(73) Proprietor: Microsoft Technology Licensing, LLC, Redmond, WA 98052 (US)
(72) Inventor: Bell, Matthew, Palo Alto, CA 94306 (US)
(74) Representative: Kazi, Ilya

(56) References cited:
- WO-A-98/38533
- US-A- 5 528 263
- US-B1- 6 176 782
- US-B1- 6 353 428
- "SUPREME PARTICLES: R111" <URL:HTTP://WWW.R111.ORG>, 1999, XP002989704
- ARTCOM: "PROJEKT BODYMOVER 2000; Koerperbewegung als Mittel zur Schaffung eines audio-visuellen Raum-Erlebnisses" <URL:HTTP://WWW.ARTCOM.DE/IMAGES/STORIES/2 _PRO_BODYMOVER/BODYMOVER_D.PDF>, 2000, XP002989289
- LEIBE B ET AL: 'The Perceptive Workbench: toward spontaneous and natural interaction in semi-immersive virtual environments' VIRTUAL REALITY, 2000. PROCEEDINGS. IEEE 18 March 2000, IEEE COMPUT. SOC, US, pages 13 - 20, XP010378965 DOI: 10.1109/VR.2000.840358 ISBN: 978-0-7695-0478-0
- HOLGER FOERTERER: "helikopter", INTERNET CITATION, 2001, XP002989288, Retrieved from the Internet: URL:http://www.foerterer.com/helikopter/de scription.htm [retrieved on 2001-01-01]
- ARTCOM: "PROJEKT BODYMOVER 2000; Koerperbewegung als Mittel zur Schaffung eines audio-visuellen Raum-Erlebnisses", INTERNET CITATION, 2000, XP002989289, Retrieved from the Internet: URL:http://www.artcom.de/images/stories/2_ pro_bodymover/bodymover_d.pdf [retrieved on 2000-01-01]
- HOLGER FOERTERER: "fluidum 1", INTERNET CITATION, 1999, XP002989287, Retrieved from the Internet: URL:http://www.foerterer.com/fluidum/decri ption.htm [retrieved on 1999-01-01]
- PARADISO J A ET AL: 'Optical Tracking for Music and Dance Performance', [Online] no. 4TH, 30 September 1997, pages 1 - 8, XP002548974 CONFERENCE ON OPTICAL 3-D MEASUREMENT TECHNIQUES, XX, XX Retrieved from the Internet: <URL:http://www.media.mit.edu/resenv/pubs/p apers/97_09_Zurich_3D4.pdf> [retrieved on 2009-09-29]
- FLEISCHMANN M ET AL: 'Linking between real and virtual spaces: building the mixed reality stage environment' USER INTERFACE CONFERENCE, 2001. AUIC 2001. PROCEEDINGS. SECOND AUSTRA LASIAN GOLD COAST, QLD., AUSTRALIA 29 JAN.-1 FEB. 2001, LOS ALAMITOS, CA, USA,IEEE COMPUT. SOC, US 29 January 2001, pages 29 - 33, XP010534518 DOI: 10.1109/AUIC.2001.906273 ISBN: 978-0-7695-0969-3
- CHUNG-LIN HUANG ET AL: 'A model-based complex background gesture recognition system' SYSTEMS, MAN AND CYBERNETICS, 1996., IEEE INTERNATIONAL CONFERENCE ON BEIJING, CHINA 14-17 OCT. 1996, NEW YORK, NY, USA,IEEE, US vol. 1, 14 October 1996, pages 93 - 98, XP010206604 DOI: 10.1109/ICSMC.1996.569746 ISBN: 978-0-7803-3280-5
- FLAVIA SPARACINO: '(Some) computer vision based interfaces for interactive art and entertainment installations' INTER_FACE BODY BOUNDARIES, ISSUE EDITOR EMANUELE QUINZ, ANOMALIE, N.2, PARIS, FRANCE, ANOMOS, 2001, [Online] 01 January 2001, MIT MEDIA LAB, XP055013273 Retrieved from the Internet: <URL:http://alumni.media.mit.edu/~flavia/Pa pers/Flavia_isea2000.pdf> [retrieved on 2011-11-28]
- MARK HUANG ET AL: 'Shadow Vision' INTRODUCTION TO COMPUTER GRAPHICS, [Online] 06 December 1999, XP055013291 Retrieved from the Internet: <URL:http://groups.csail.mit.edu/graphics/c lasses/6.837/F99/projects/reports/team16.pd f> [retrieved on 2011-11-28]
- EMANUELE QUINZ: 'Conference papers', [Online] 10 April 2001, XP055013293 Retrieved from the Internet: <URL:http://www.isea2000.com/pop_actes.htm> [retrieved on 2011-11-28]
- FLAVIA SPARACINO: 'DANCE SPACE : AN INTERACTIVE VIDEO INTERFACE' ACTES / PROCEEDINGS, ISEA2000 - 10/12/2000 - AUDITORIUM 1 10 December 2000, XP055013294

## Description

### CROSS-REFERENCES TO RELATED APPLICATIONS

This application is a divisional application of EPA 02739710.8, which claims priority from U.S. Provisional Patent Application No. 60/296,189 filed June 5, 2001 entitled INTERACTIVE VIDEO DISPLAY SYSTEM THAT USES VIDEO INPUT.

### BACKGROUND OF THE INVENTION

The present invention relates in general to image processing systems and more specifically to a system for receiving and processing an image of a human user to allow interaction with video displays.

Image processing is used in many areas of analysis, education, commerce and entertainment. One aspect of image processing includes human-computer interaction by detecting human forms and movements to allow interaction with images. Applications of such processing can use efficient or entertaining ways of interacting with images to define digital shapes or other data, animate objects, create expressive forms, etc.

Detecting the position and movement of a human body is referred to as "motion capture." With motion capture techniques, mathematical descriptions of a human performer's movements are input to a computer or other processing system. Natural body movements can be used as inputs to the computer to study athletic movement, capture data for later playback or simulation, enhance analysis for medical purposes, etc.

Although motion capture provides benefits and advantages, motion capture techniques tend to be complex. Some techniques require the human actor to wear special suits with high-visibility points at several locations. Other approaches use radio-frequency or other types of emitters, multiple sensors and detectors, blue-screens, expensive post-processing, etc. Techniques that rely on simple visible-light image capture are usually not accurate enough to provide well-defined and precise motion capture.

Some motion capture applications allow an actor, or user, to interact with images that are created and displayed by a computer system. For example, an actor may stand in front of a large video screen projection of several objects. The actor can move, or otherwise generate, modify, and manipulate, the objects by using body movements. Different effects based on an actor's movements can be computed by the processing system and displayed on the display screen. For example, the computer system can track a path of the actor in front of the display screen and render an approximation, or artistic interpretation, of the path onto the display screen. The images with which the actor interacts can be e.g., on the floor, wall or other surface; suspended three-dimensionally in space, displayed on one or more monitors, projection screens or other devices. Any type of display device or technology can be used to present images with which a user can control or interact.

In some applications, such as point-of-sale, retail advertising, promotions, arcade entertainment sites, etc., it is desirable to capture the motion of an untrained user (e.g., a person passing by) in a very unobtrusive way. Ideally, the user will not need special preparation or training and the system will not use unduly expensive equipment. Also, the method and system used to motion capture the actor should, preferably, be invisible or undetectable to the user. Many real-world applications must work in environments where there are complex and changing background and foreground objects, short time intervals for the capture, changing lighting conditions and other factors that can make motion capture difficult.

The article "Supreme particles" (XP-002989704) is concerned with a system of the company Reactrix Systems Inc.

US 6 353 428 discloses a method and a device for detecting an object in an area radiated by waves in the invisible spectral range.

Paradiso et al. "Optical tracking for music and dance performance" (XP-002548974) discloses method of real-time optical tracking systems.

Huang et al. "Shadow vision" (XP-55013291) discloses recognizing hand puppets by using contour modeling.

Other systems are disclosed in articles such as "(Some) computer vision based interfaces for interactive art and entertainment installations" (XP-55013273) by Flavia et al, "Helikopter" (XP-002989288) and "Fluidum 1" (XP-002989287) by Foerterer, "Projekt bodymover" (XP-002989289) by Artcom or "The Perceptive Workbench: Toward Spontaneous and Natural Interaction in Semi-Immersive Virtual Environments" (XP-010378965) by Leibe et al.

### BRIEF SUMMARY OF THE INVENTION

Aspects of the invention are recited in the independent claims and preferred features are recited in dependent claims.

The present invention permits interaction between a user and a computer display system using the user's (or another object's) movement and position as input to a computer. The computer generates a display that responds to the user's position and movement. The generated display can include objects or shapes that can be moved, modified, or otherwise controlled by a user's body movement.

An embodiment of the invention comprises a system having: a camera system operable to provide images of an object against a background; a display system operable to render video images onto a surface; and a processor coupled to receive said images from said camera system and coupled to drive said display system, said processor operable to adapt to changes in said background analyzing changes over time in images from said camera system.

According to an embodiment, said camera system comprises a light source that is strobed.

According to an embodiment, said processor is further operable to process said images from said camera system based on said strobed light source.

According to an embodiment, said processor is operable to adapt to changes in said background by generating an adaptive model of said background by analyzing changes over time in images from said camera system.

According to an embodiment, said processor is further operable to generate said video images based on said adaptive model and said images from said camera system.

According to an embodiment, at least a portion of said surface coincides with said background.

According to an embodiment, said processor is further operable to detect said object and positions thereof.

According to an embodiment, said processor is further operable to determine an influence image, wherein the influence image includes a region around an object image derived from the object.

According to an embodiment, said processor is further operable to determine an interaction between the object and at least one of the video images based on the influence image.

According to an embodiment, said processor is further operable to determine a gradient of the influence image and to determine interaction between the object and at least one of the video images based on the gradient.

According to an embodiment, said processor is further operable to determine a brightness of the influence image and to determine interaction between the object and the at least one video image based on the brightness.

According to an embodiment, said processor is further operable to determine a brightness of the influence image and to determine interaction between the object and at least one of the video images based on the brightness.

According to an embodiment, said processor is further operable to determine a gradient of the object and to determine interaction between the object and at least one of the video images based on the gradient.

According to an embodiment, said processor is further operable to determine a brightness of an area derived from the object and to determine interaction between the object and at least one video image based on the brightness.

According to an embodiment, said processor is further operable to determine an interaction between the object and at least one of the video images.

According to an embodiment, said processor is further operable to determine a strength of said interaction.

According to an embodiment, said processor is further operable to determine a direction of said interaction.

According to an embodiment, said processor is further operable to determine a direction of said interaction.

According to an embodiment, said interaction is one of: the object pushing the at least one video image; the object touching the at least one video image; the object deforming the at least one video image; and the object manipulating the at least one video image.

According to an embodiment, said processor is further operable to detect a lighting phenomenon due to sources of light other than said camera system light source, such as a lighting phenomenon causing shadows.

According to an embodiment, said processor is further operable to generate said adaptive model of said background by identifying pixels in said frames having substantially constant brightness over time.

According to an embodiment, said processor is further operable to generate said adaptive model of said background by computing median values over time for said pixels.

According to an embodiment, said processor is further operable to generate said adaptive model of said background by incorporating into said adaptive model of said background changes in said background that occur over time.

According to an embodiment, said processor is further operable to generate said adaptive model of said background by incorporating into said adaptive model of said background changes in said background that occur due to changes in lighting affecting said background.

According to an embodiment, said processor is further operable to classify pixels of said images as either foreground or background by comparing said images to said adaptative model.

According to an embodiment, said processor is further operable to generate said adaptive model of said background by incorporating into said adaptive model of said background information relating to at least a portion of said object that has remained substantially stationary for a period of time.

According to an embodiment, said processor is further operable to generate said adaptive model of said background by computing a weighted average of a current image of said images from said camera system with said adaptive model of said background.

According to an embodiment, said processor is further operable to tune said weighted average to change a rate at which said model of said background adapts to changes in said images from said camera system.

According to an embodiment, said processor is further operable to generate said display item by distinguishing between foreground that corresponds to said object and said background.

According to an embodiment, said distinguishing comprises comparing a current image of said images from said camera system with said adaptive model of said background.

According to an embodiment, said distinguishing further comprises determining if differences between corresponding pixels in said current image of said images from said camera system and said adaptive model of said background are greater than a threshold to determine location of said object.

According to an embodiment, said camera system comprises two cameras to provide a stereo image, and wherein said processor is further operable to compute depth data based on said stereo image and to use said depth data to generate said model of said background.

In an embodiment of the invention, displayed images are affected by a user's actions in real-time.. The display can be projected around the user so that that the user's actions create effects that emanate from the user and affect display areas proximate to the user. Or the user can affect video objects such as by kicking, pushing, moving, deforming, touching, etc., items in video images. Interference between light used to display interactive images and light used to detect the user is minimized by using light of substantially different wavelengths.

In one embodiment, a user is illuminated with infrared light that is not visible to the human eye. A camera that is sensitive to infrared light is used to capture an image of the user for position and motion analysis. Visible light is projected by a projector onto a screen; glass or other surface to display interactive images, objects, patterns or other shapes and effects. The display surface can be aligned around the user so that their physical presence within the display corresponds to their virtual presence, giving the experience of physically touching and interacting with virtual object.

One embodiment can use patterned illumination instead of a simple, non-visible, uniform "floodlight." With patterned illumination, a pattern, such as a checkerboard, random dot pattern, etc., is projected. The pattern is used by processes executing on a computer to interpret a camera image and to detect an object from a background and/or other items in a scene. The pattern can be generated as a background (so that it does not impinge upon an obj ect to be detected) or the pattern can be projected over all of the camera's viewable scene so that it illuminates background, foreground and objects to be detected and motion captured.

One way to achieve the patterned illumination includes using an infrared LED cluster or other non-visible light source in a slide projector. Another approach could use an infrared laser beam that is deflected, shuttered, scanned, etc.; to produce a pattern.

Another way to achieve the patterned illumination is to use a regular "floodlight", but mark the aforementioned pattern onto the camera's viewable area using ink, dye, or paint that is either dark or highly reflective in the camera's receptive frequency. This ink, dye, or paint can be made invisible to the human eye so as to improve the aesthetics of the display.

Another embodiment uses a, gradient approach to determine object - image interaction. An "influence image" is created by creating a gradient aura, or gray scale transition, around a detected object. As the detected object moves, the gradient aura is calculated in real time. As the gradient aura impinges upon a video image or item, the brightness and gradient in the region of the impinged item is calculated. The strength and direction of interaction (e.g., a pushing of the item) is a function of the brightness and gradient, respectively, of the impinged region.

In one embodiment the invention provides a system for detecting an object and generating a display in response, the system comprising a first source, for outputting electromagnetic energy in a first wavelength range, a detector for detecting a reflection of the first source of electromagnetic energy from an object, a processor coupled to the detector for using the detected reflection to generate a display signal, a second source, for outputing electromagnetic energy at a second wavelength range, wherein the second source generates a visible display in response to the display signal, wherein the first and second wavelength ranges are different.

In another embodiment the invention provides a method for detecting an object in an image captured with a camera, the method comprising using a patterned illumination to illuminate a background differently from the object; and using a processing system to define the object apart from the background.

In another embodiment the invention provides a method for computing an interaction of an object with a video item, the method comprising using a processor to determine a gradient for the object; using a processor to determine a boundary for the video item; and identifying an interaction by using the gradient and the boundary.

The invention also provides for an embodiment comprising a system for detecting an object and generating a display in response, the system comprising: a first source, for outputing electromagnetic energy in a first wavelength range; a detector for detecting a reflection of the first source of electromagnetic energy from an object; a processor coupled to the detector for using the detected reflection to generate a display signal; and a second source, for outputing electromagnetic energy at a second wavelength range, wherein the second source generates a visible display in response to the display signal, wherein the first and second wavelength ranges are different.

According to an embodiment, the first source outputs light that is not in the visible spectrum and the second source outputs light that is in the visible spectrum.

According to an embodiment, the first source outputs infrared light.

According to an embodiment, the second source includes a video projector.

According to an embodiment, the video projector projects images from above the object.

According to an embodiment, the video projector projects images on a surface adjacent to the object.

According to an embodiment, the surface is part of a rear-projection system.

According to an embodiment, the surface is part of a front-projection system.

According to an embodiment, the object includes a human user. According to an embodiment, the first source includes a pattern of illumination.

According to an embodiment, the pattern includes a random dot pattern.

An embodiment further comprises an infrared light-emitting diode cluster for generating the pattern of illumination.

An embodiment further comprises a process for determining an influence image, wherein the influence image includes a region around an object image derived from the object.

According to an embodiment, the visible display includes an item, the system further comprising a process for determining a gradient of the influence image; and a process for using the gradient to determine interaction between the object and the item.

According to an embodiment, the visible display includes a rendering of a character.

An embodiment comprises a method for obtaining an image of a human user wherein the human user is adjacent to a displayed image, the method comprising: using light at a first wavelength to illuminate the human user; using a camera responsive to the light at a first wavelength to detect the image of the human user; and using light at a second wavelength, different from the first wavelength, to generate the displayed image.

According to an embodiment, multiple cameras are used.

According to an embodiment, at least two cameras are used to produce a stereo effect.

According to an embodiment, a plasma screen is used to generate the displayed image.

According to an embodiment, the displayed image includes advertising.

According to an embodiment, the displayed image is part of a video game.

An embodiment further comprises strobing the light at a first wavelength.

An embodiment further comprises interconnecting multiple systems so that information about image detection and displays can be transferred between the systems.

An embodiment further comprises using the transferred information to create a single display from two or more displays.

An embodiment comprises method for detecting an object in an image captured with a camera, the method comprising: using a patterned illumination to illuminate a background and not the object; and using a processing system to define the object apart from the background.

According to an embodiment, the patterned illumination includes a random dot pattern.

According to an embodiment, the patterned illumination includes a checkerboard pattern.

According to an embodiment, the patterned illumination also illuminates the object.

An embodiment comprises a method for detecting an object in an image captured with a camera, the method comprising: using a patterned background; and using a processing system to define the object apart from the background.

An embodiment comprises a method for computing an interaction of an object with a video item, the method comprising: using a processor to determine a gradient for the object; using a processor to determine a boundary for the video item; and identifying an interaction by using the gradient and the boundary.

An embodiment further comprises using a processor to determine a brightness of an area derived from the object; and identifying an interaction by using the brightness of the area and the boundary.

According to an embodiment, the interaction is a person pushing the item.

According to an embodiment, the interaction is a person touching the item.

According to an embodiment, the interaction is a person deforming the item.

According to an embodiment, the interaction is a person manipulating the item

An embodiment comprises a system for detecting an object and generating an output in response, the system comprising: a first source, for outputing electromagnetic energy in a first wavelength range; a detector for detecting a reflection of the first source of electromagnetic energy from an object; a processor coupled to the detector for using the detected reflection to generate a display signal; a second source, for outputing electromagnetic energy at a second wavelength range, wherein the second source generates a visible display in response to the display signal, wherein the first and second wavelength ranges are different; and audio output for outputing audio.

### BRIEF DESCRIPTION OF THE DRAWINGS

Fig. 1 shows first configuration of an embodiment using a co-located projector and camera;
Fig. 2 shows an overhead projection configuration;
Fig. 3 shows a rear-projection configuration;
Fig. 4 shows a side-projection configuration;
Fig. 5A illustrates a subject under uniform illumination;
Fig. 5B illustrates a background under random dot pattern illumination;
Fig. 5C illustrates a subject and background under random dot pattern illumination;
Fig. 5D shows a result of detesting subject from a background using random dot pattern illumination;
Fig. 6A shows a human user interacting with a video object; and
Fig. 6B illustrates an influence image.

### DETAILED DESCRIPTION OF THE INVENTION

Several configurations of the invention are described below. In an embodiment, the present invention uses a first light source to illuminate a user, or another object. The first light source uses light that is not visible to humans. For example, infrared or ultraviolet light can be used. A camera that is sensitive to light at the wavelength range of the first light source is used to detect a user who is illuminated by the first light source. A computer (or other processing system) is used to process the detected object image and to generate images for display. A second light source (e.g., a projector, video screen, etc.) is used to display the generated display images to a human user or viewers. The displayed images are at wavelengths that minimize interference with the camera's object detection. Typically, the visible spectrum is used to display the images.

In an embodiment, the display surrounds the user such that the user's virtual presence is aligned with the user's physical presence. Thus, the virtual scene on the display has a physical location around the user, and the user's movement within the display will cause identical movement of the user's representation within the virtual scene. For example, the user can impinge on a virtual object's physical location and know that this will cause their virtual representation to touch the virtual object in the computer system. The use of the term "touch" or "touching" in this specification does not mean physical contact with an object, such as a person, and an image item. Rather the notion of touching means that the objects's position and action in physical space is translated into an effect in a generated image, including effects of moving items in the generated images.

Displayed images, or items can include objects, patterns, shapes or any visual pattern, effect, etc. Aspects of the invention can be used for applications such as interactive lighting effects for people at clubs or events, interactive advertising displays, characters and virtual objects that react to the movements of passers-by, interactive ambient lighting for public spaces such as restaurants, shopping malls, sports venues, retail stores, lobbies and parks, video game systems, and interactive informational displays. Other applications are possible and are within the scope of the invention.

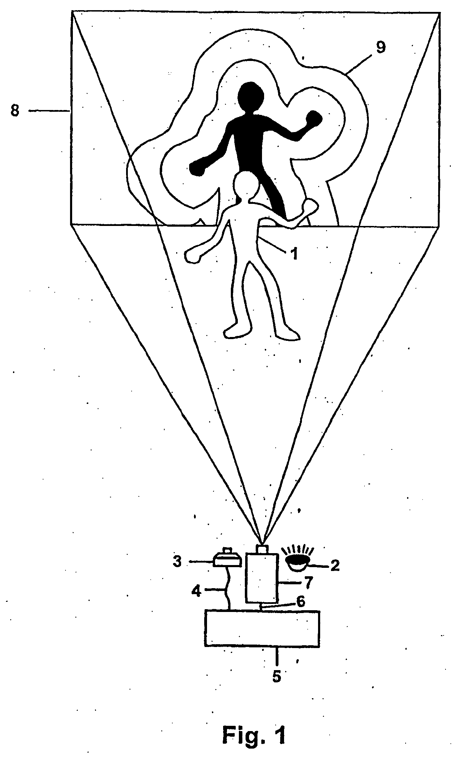

Fig. 1 shows a front-projection embodiment of the invention using a co-located camera and projector. In Fig. 1, a person 1 is illuminated by an infrared (or other non-visible light) lamp 2. The image of the person is photographed by an infrared (or other non-visible light) camera 3. This signal is transmitted real-time 4 to computer 5. The computer performs the object detection algorithm, and generates the video effect in real time. The effect is transmitted 6 real-time to video projector 7. The projector projects the resulting image onto a screen 8 or some other surface. The video effect is then displayed 9 on the screen, in real time, and aligned with the person.

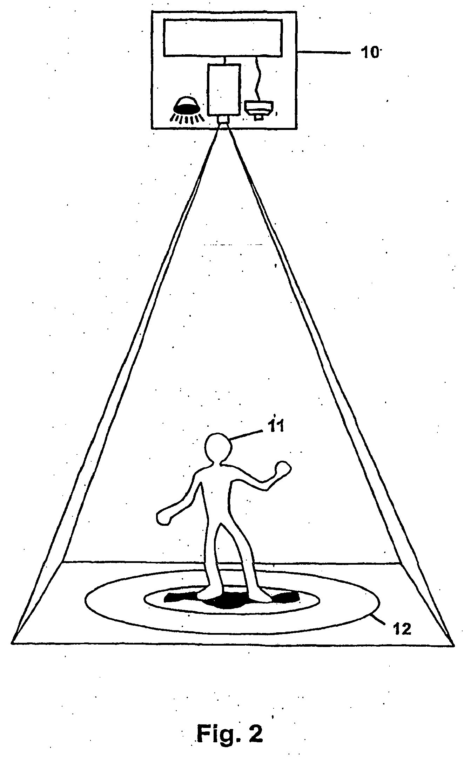

Fig. 2 shows an overhead projection configuration of the system. Component 10 includes the aforementioned system. Component 10 is shown mounted vertically here, but the camera, projector, and light source within 10 can also be mounted horizontally and then redirected downwards with a mirror. A person moving on the ground 11 can have the video signal projected onto the ground around them 12. The person's own shadow obscures a minimal amount of the image when the projector is directly overhead.

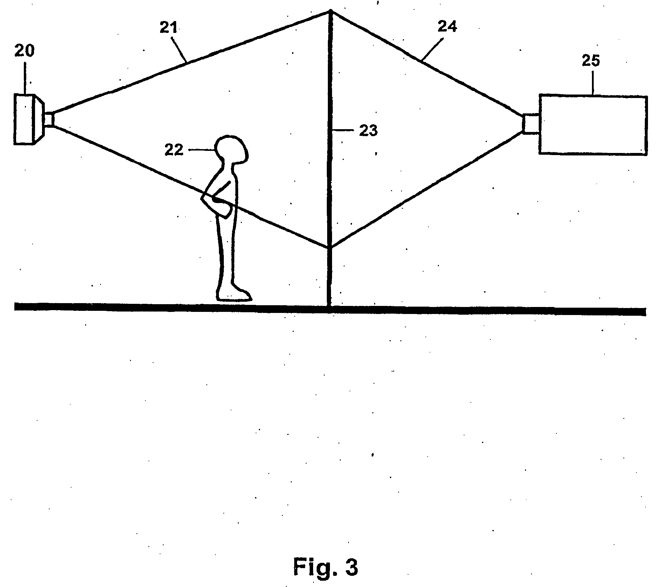

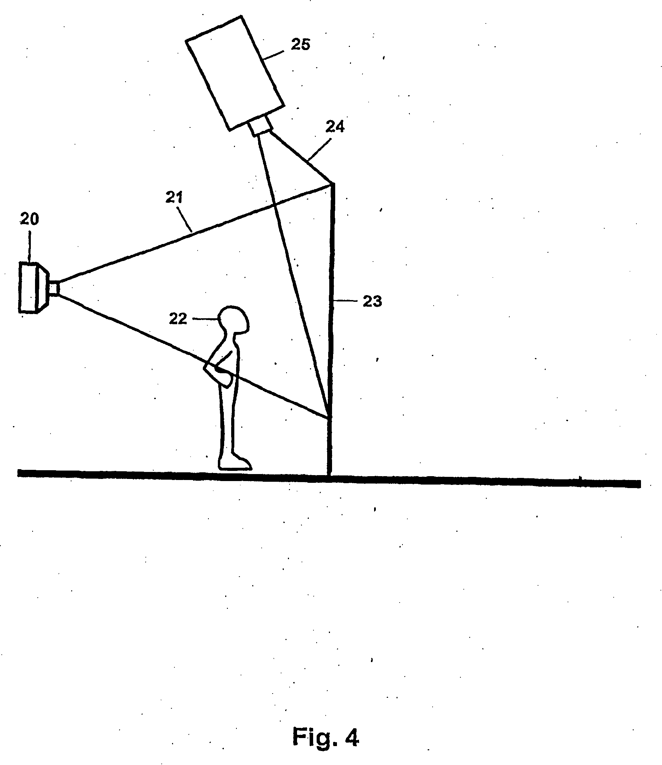

Figs. 3 and 4 show two more alternate configurations for the camera and projector. In both figures, camera 20 captures objects such as a person 22 in front of a screen 23. The angle viewed by the camera is shown at 21. In Fig. 3 projector 25 is placed behind the screen. The cast light from projector 24 can be seen on the screen from both sides. In Fig. 4, projector 25 is at an oblique angle to the screen; its light cone 24 is shown. Both of these configurations make it more likely that there are no shadows obstructing the projected image.

As described in the configuration's, above, a video camera is used to capture the scene at a particular location for input into the computer. In most configurations of the device, the camera views part of the output video display. To prevent unwanted video feedback, the camera can operate at a wavelength that is not used by the video display. In most cases, the display will use the visible light spectrum. In this case, the camera must photograph in a non-visible wavelength, such as infrared, so that the video display output is not detected.

The scene being videotaped must be illuminated in light of the camera's wavelength. In the case of infrared, sources including sunlight, a heat lamp or infrared LEDs can be used to illuminate the scene. These lights can be positioned anywhere; however, the camera's view of spurious shadows from these lights can be minimized by placing the light source in proximity to the camera. A light source, such as one or more lights, can illuminate objects with a uniform lighting, as opposed to the patterned illumination discussed, below. In a preferred embodiment, the video signal is exported in real-time to the computer. However, other embodiments need not achieve real-time or near-real-time and can process object, or video images (i.e., display images) at times considerably prior to displaying the images.

This component is designed to be modular; any computer software that utilizes the video input from the previous component and outputs the results to a video display can be used here.

Most instances of this component will have two parts: the first part handles the detection of mobile objects from static background, while the second part utilizes the object information to generate a video output. Numerous instances of each part will be described here; these instances are simply meant to be examples, and are by no means exhaustive.

In the first part, the live image from the video camera is processed real-time in order to separate mobile objects (e.g. people) from the static background, regardless of what the background is. The processing can be done as follows:

First, input frames from the video camera are converted to grayscale to reduce the amount of data and to simplify the detection process. Next, they may be blurred slightly to reduce noise.

Any object that does not move over a long period of time is presumed to be background; therefore, the system is able to eventually adapt to changing lighting or background conditions. A model image of the background can be generated by numerous methods, each of which examines the input frames over a range of time. In one method, the last several input frames (or a subset thereof) are examined to generate a model of the background, either through averaging, generating the median, detecting periods of constant brightness, or other heuristics. The length of time over which the input frames are examined determines the rate at which the model of the background adapts to changes in the input image.

In another method, the background model is generated at each time step (or more infrequently) by computing a weighted average of the current frame and the background model from the previous time step. The weight of the current frame is relatively small in this calculation; thus, changes in the real background are gradually assimilated into the background model. This weight can be tuned to change the rate at which the background model adapts to changes in the input images.

An object of interest is presumed to differ in brightness from the background. In order to find objects at each time step, the current video input is subtracted from the model image of the background. If the absolute value of this difference at a particular location is larger than a particular threshold, then that location is classified as an object; otherwise, it is classified as background.

The second part can be any program that takes the object/background classification of an image (possibly in addition to other data) as input, and outputs a video image based on this input, possibly in real time. This program can take on an infinite number of forms, and is thus as broadly defined as a computer application. For example, this component could be as simple as producing a spotlight in the shape of the detected objects, or as complicated as a paint program controlled through gestures made by people who are detected as objects. In addition, applications could use other forms of input, such as sound, temperature, keyboard input etc. as well as additional forms of output, such as audio, tactile, virtual reality, aromatic, etc.

One major class of applications includes special effects that use the object/background classification as input, For example, stars, lines, or other shapes could be drawn in the output video image in a random portion of the locations that were classified as "object". These shapes could then be set to gradually fade away over time, so that people leave transient trails of shapes behind them as they move around. The following are examples of other effects in the same class:
- contours and ripples surrounding the objects
- a grid which is deformed by the presence of objects
- simulations of flame and wind, and other matrix convolutions applied to objects
- special effects that pulse to the beat of the music, which is detected separately

Another major class of applications allows the real objects to interact with virtual objects and characters. For example, an image showing a group of ducklings could be programmed to follow behind any real object (e.g. a person) that walks in front of the display.

In addition, computer games that can be played by people moving in front of the camera form another class of applications.

However, this list is not exclusive; this component is designed to be programmable, and thus can run any application.

The output of the processing software from the previous component is displayed visually. Possible displays include, but are not limited to video projectors, televisions, plasma displays, and laser shows. The displayed image can be aligned with the video camera's input range so that the video effects align with the locations of the people causing them. Since some configurations of the video camera can detect objects in non-visible light, the problem of the display interfering with the camera is avoided.

There are numerous possible configurations for the different components. For example, the camera and a video projector can be in the same location and pointed in the same direction The camera and projector can then be pointed at a wall as shown in Fig. 1, pointed at the ground, redirected with a mirror as shown in Fig. 2, or pointed at any other surface. Alternatively, the projector could be placed behind the screen as shown in Fig. 3 so that the display is identical to the one in Fig. 1, but the person is no longer in the way of the projection, so they do not cast a shadow. The shadow could also be avoided by placing the projector at an oblique angle to the screen as shown in Fig. 4. The video display could also be a large-screen TV, plasma display, or video wall. While the aforementioned configurations all have the video display lined up with the video input, this is not necessary; the video display could be placed anywhere. The preceding list is not exhaustive; there are numerous additional possible configurations.

The overall system can be networked, allowing vision information and processing software state information to be exchanged between systems. Thus an object detected in the vision signal of one system can affect the processing software in another system. In addition, a virtual item in the display of one system could move to other systems. If the displays of multiple systems are aligned together so that they form a single larger display, then the multiple systems can be made to function as if they were a single very large system, with objects and interactions moving seamlessly across display boundaries.

One common problem with the vision system is that, in cases where there is uncontrollable ambient illumination (e.g. sunlight) of the camera's viewable area from a significantly different angle than the camera, objects cast shadows onto the background. If these shadows are strong enough, the vision system may mistake them for objects. These shadows can be detected and removed by strobing the camera's light source. By subtracting a camera input image with ambient light alone from a camera input image with both the ambient light and the camera's light, the system yields an image that captures the scene as if only the camera's light were being used, thus eliminating the detectable shadows from the ambient light.

Additional accuracy in detecting objects with the images captured by the camera can be obtained by using patterned illumination or patterned markings.

One shortcoming of using a simple floodlight illumination system for computer vision is that if the colors of objects being viewed by the camera are very similar, then the objects can be very difficult to detect. If the camera operates in monochrome it is much more likely for the object and background to look the same.

Using a patterned object to cover camera's viewable area can improve object detection. A pattern that contains two or more colors intermingled in close proximity is used, it is highly unlikely that other objects will have a similar look since at least one color of the pattern will look different from the color of surrounding objects. If a patterned object, such as a screen, is used as a background before which are the objects to be detected, then objects that pass in front of the patterned screen are more easily detected by the vision algorithm.

For example, in an infrared vision application the patterned object could be a background mat that appears white to the human eye, but contains a light & dark checkered pattern that is invisible to the human eye but visible to the camera. By using a pattern that is not in the visible light spectrum, the patterned mat will not interfere with the aesthetics of the system. The display system (e.g., projection video) can project output images onto the mat, as described above. A process executing on a processing system such as a computer system can be provided with the background pastern, thus masking detection of an object in front of the mat easier, although the system could learn the patterned background in the same way that the vision algorithm learns any other background. Also, the ability of the system to adapt to changes in background light brightness would not be adversely affected.

A patterned illumination can also be projected from a light source onto the camera's viewable area. As long as the camera and invisible light source are in different, offset locations, parallax effects will cause the camera's view of the projected pattern to be distorted as objects move through the camera's viewing area. This distortion helps make objects that have similar colors stand out from each other. If the difference between the two images seen by the camera is taken, the result will show the shape of any object that has appeared, disappeared, or moved between the two images. If the image of an object in front of the background is subtracted from an image of the background alone, the result is an image that is zero where there is background and nonzero where there are other objects. This technique can be used in combination with other aspects of the invention discussed, herein.

A patterned light source can be achieved through several means. One method is to use an infrared light-emitting diode (LED) cluster or another non-visible light source in a slide projector. A set of lenses would be used to focus the light source through a slide containing the desired pattern, thus casting the pattern's image onto the camera's viewing area. In another method, an infrared laser beam could be shined onto a laser pattern generator or other scattering device in order to produce a light pattern on the camera's viewing area. Light can be deflected, shuttered, scanned, etc., in order to achieve a pattern. Many other approaches are possible.

A patterned light source is also useful for 3-D computer vision. 3-D computer vision techniques such as the Marr-Poggio algorithm take as input two images of the same scene taken from slightly different angles. The patterns on the images are matched up to determine the amount of displacement, and hence the distance from the camera, at each point in the image. The performance of this algorithm degrades when dealing with objects of uniform color because uniform color makes it difficult to match up the corresponding sections in the image pair. Thus, the patterned light source can improve the distance estimates of some 3D computer vision algorithms.

The two input images to these 3-D vision algorithms are usually generated using a pair of cameras pointed at the scene. However, it would also be possible to use only one camera. The second image could be an entirely undistorted version of the projected pattern, which is known ahead of time. This image of the pattern is essentially identical to what a second camera would see if it were placed at the exact same location as the patterned light source. Thus, the single camera's view and the projected pattern together could be used as an input to the 3-D vision algorithm. Alternatively, the second image could be an image of the background alone, taken from the same camera.

While many different kinds of patterns can be used, a high-resolution random dot pattern has certain advantages for both 2-D and 3-D vision. Due to the randomness of the dot pattern, each significantly sized section of the dot pattern is highly unlikely to look like any other section of the pattern. Thus, the displaced pattern caused by the presence of an object in the viewing area is highly unlikely to look similar to the pattern without the object there. This maximizes the ability of the vision algorithm to detect displacements in the pattern, and therefore objects. Using a regular pattern such as a grid can cause some difficulty because different sections of the pattern are identical, causing the displaced pattern to often look like the non-displaced pattern.

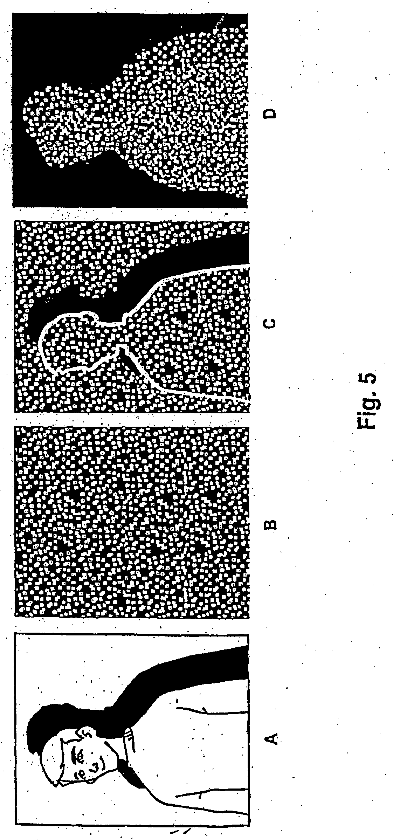

Figs. 5A-D show the usefulness of a random dot pattern in detecting an object. Fig. 5A shows a picture of a person under normal illumination. The person has a similar brightness to the background, making detection difficult. In Fig. 5B, a random dot pattern is projected onto the background from a light source near the camera. When the person stands in front of this pattern, the pattern reflected off of the person is displaced, as shown in Fig. 5C. By taking the difference between the images in Figs. 5B and 5C, the image of Fig. 5D is obtained which defines the image area of the person with a strong signal.

Other approaches can be used to improve object detection. For example, a light source can be "strobed" or turned on-and-off periodically so that detection of shadows due to other light sources (e.g. ambient light) is made easter.

Once an object has been detected and defined the preferred embodiment uses a gradient aura to determine degree and direction of interaction of the object with a displayed image item.

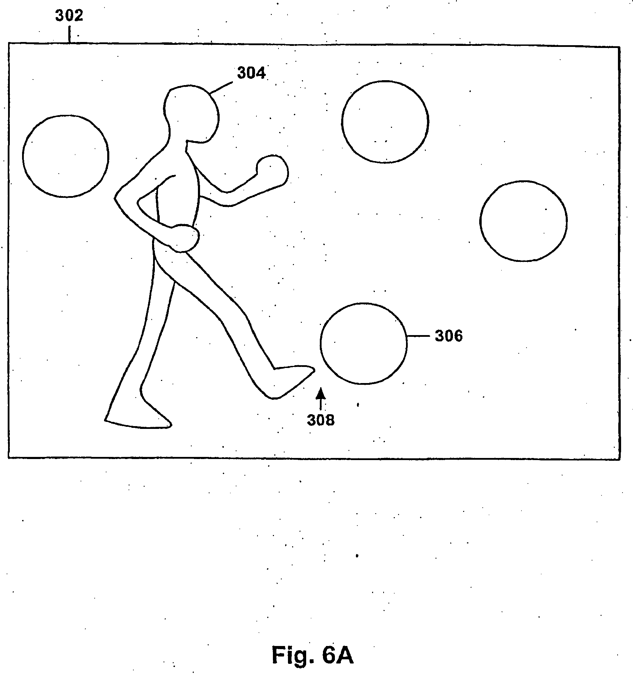

Fig. 6A shows a human user interacting with a video object.

In Fig. 6A, object 304 has been detected and is shown in outline form. One representation of the object within a computer's processing can use the outline definition depicted in Fig. 6A. Video screen 302 displays several image items, such as image 306 of a bail.

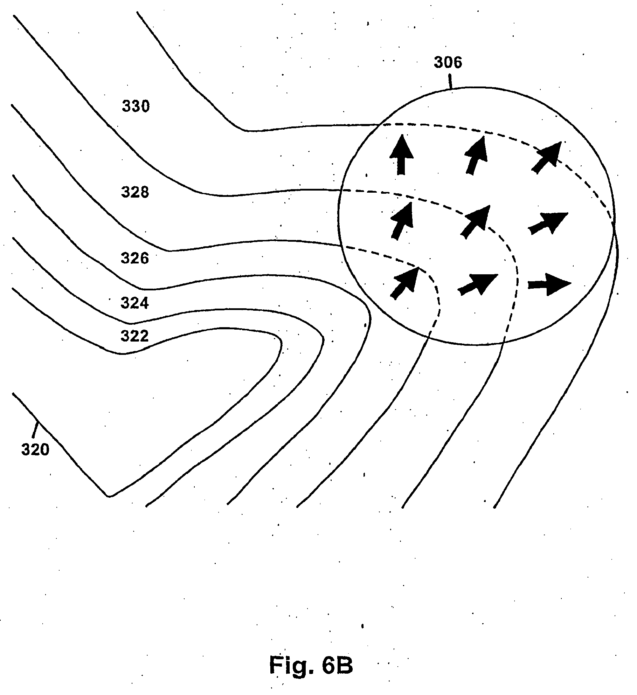

Fig. 6B illustrates an influence image for the region of 308 of Fig. 6A.

In Fig. 6B, the outline image of the user's foot 320 and lower leg are used to generate successively larger outline areas. The original outline area 320's region is assigned a large pixel brightness value corresponding to white. Each successive outline area, 322, 324, 326, 328, 330 is assigned a progressively lower value so that a point farther away from the initial outline (white) area will have a lower pixel value. Note that any number of outline areas can be used. Also, the size and increments of outline areas can vary, as desired. For example, it is possible to use a continuous gradient, rather than discrete areas. The collection of all outline areas is referred to as the "influence image."

The influence image is compared to different image items. In Fig. 6B, ball item 306 impinges upon gradient areas 326, 328 and 330. As is known in the art, direction lines are determined in the direction of the gradient of the pixel value field for the impinged areas. Fig. 6B shows three example direction lines within item 306. The direction lines can be combined, e.g., by averaging, or a select single line can be used. The processing also detects that the brightest outline area impinged by the item is outline area 326. Other approaches are possible. For example, the brightness and gradient can be averaged over every point in the area of the image item, or on a subset of those points. Also, some embodiments can include duration of contact as a factor in addition to the brightness and gradient.

The interaction between an object, such as a person, and an item on the screen is computed using both the brightness of impinged outline areas and the direction as computed using one or more direction lines. The impinged brightness corresponds to the strength with which the user is "touching" the item. The gradient corresponds to the direction in (or from, depending on the sign of the calculation) which the item is being touched.

Although the invention has been discussed with reference to specific embodiments thereof, these embodiments are illustrative, not restrictive, of the invention. For example, although the described embodiments use a camera as a detector, different types of detection devices can be employed. The camera can be digital or analog. A stereo camera could be used in order to provide depth information as well as position. In cases where processing and display are not done in real time, film and other types of media can be used and followed up by a digital conversion before inputting the data to a processor. Light sensors or detectors can be used. For example, an array of photodetectors can be used in place of a camera. Other detectors not contemplated herein can be used with suitable results.

In general, any type of display device can be used with the present invention. For example, although video devices have been described in the various embodiments and configurations, other types of visual presentation devices can be used. A light-emitting diode (LED) array, organic LED (OLED), light-emitting polymer (LEP), electromagnetic, cathode ray, plasma, mechanical or other display system can be employed.

Virtual reality, three-dimensional or other types of displays can be employed. For example, a user can wear imaging goggles or a hood so that they are immersed within a generated surrounding. In this approach, the generated display can align with the user's perception of their surroundings to create an augmented, or enhanced, reality. One embodiment may allow a user to interact with an image of a character. The character can be computer generated, played by a human actor, etc. The character can react to the user's actions and body position. Interactions can include speech, co-manipulation of objects, etc.

Multiple systems can be interconnected via, e.g., a digital network. For example, Ethernet, Universal Serial Bus (USB), IEEE 1394 (Firewire), etc., can be used. Wireless communication links such as defined by 802.11b, etc., can be employed. By using multiple systems, users in different geographic locations can cooperate, compete, or otherwise interact with each other through generated images. Images generated by two or more systems can be "tiled" together, or otherwise combined to produce conglomerate displays.

Other types of illumination, as opposed to light, can be used. For example, radar signals, microwave or other electromagnetic waves can be used to advantage in situations where an object to detect (e.g., a metal object) is highly reflective of such waves. It tis possible to adapt aspects of the system to other forms of detection such as by using acoustic waves in air or water.

Although computer systems have been described to receive and process the object image signals and to generate display signals, any other type of processing system can be used. For example, a processing system that does not use a general-purpose computer can be employed. Processing systems using designs based upon custom or semi-custom circuitry or chips, application specific integrated circuits (ASICs), field-programmable gate arrays (FPGAs), multiprocessor, asynchronous or any type of architecture design or methodology can be suitable for use with the present invention.

In some aspects, the invention may provide
a system for detecting an object and generating a display in response, the system comprising
a first source, for outputing electromagnetic energy in a first wavelength range;
a detector for detecting a reflection of the first source of electromagnetic energy from an object;
a processor coupled to the detector for using the detected reflection to generate a display signal;
a second source, for outputing electromagnetic energy at a second wavelength range, wherein the second source generates a visible display in response to the display signal, wherein the first and second wavelength ranges are different.

The first source may output light that is not in the visible spectrum and wherein the second source outputs light that is in the visible spectrum.

The first source may output infrared light.

The second source may include a video projector.

The video projector may project images from above the object.

The video projector may project images on a surface adjacent to the object.

The surface may be part of a rear-projection system.

The surface may be part of a front-projection system.

The object may include a human user.

The first source may include a pattern of illumination.

The pattern may include a random dot pattern.

The system may, further comprise
an infrared light-emitting diode cluster for generating the pattern of illumination.

The system may further comprise
a process for determining an influence image, wherein the influence image includes a region around an object image derived from the object.

The visible display may include an item, the system further comprising
a process for determining a gradient of the influence image; and
a process for using the gradient to determine interaction between the object and the item.

The visible display may include a rendering of a character.

In some aspects, the invention may provide a method for obtaining an image of a human user wherein the human user is adjacent to a displayed image, the method comprising
using light at a first wavelength to illuminate the human user;
using a camera responsive to the light at a first wavelength to detect the image of the human user; and
using light at a second wavelength, different from the first wavelength, to generate the displayed image.

Multiple cameras may be used.

At least two cameras may be used to produce a stereo effect.

A plasma screen may be used to generate the displayed image.

The displayed image may include advertising.

The displayed image may be part of a video game.

The method may further comprise
strobing the light at a first wavelength.

The method may further comprise
interconnecting multiple systems so that information about image detection and displays can be transferred between the systems.

The method may further comprise
using the transferred information to create a single display from two or more displays.

In some aspects, the invention may provide a method for detecting an object in an image captured with a camera, the method comprising
using a patterned illumination to illuminate a background and not the object; and
using a processing system to define the object apart from the background.

The patterned illumination may include a random dot pattern.

The patterned illumination may include a checkerboard pattern.

The patterned illumination may also illuminate the object.

In some aspects, the invention may provides a method for detecting an object in an image captured with a camera, the method comprising
using a patterned background; and
using a processing system to define the object apart from the background, or a method for computing an interaction of an object with a video item, the method comprising
using a processor to determine a gradient for the object;
using a processor to determine a boundary for the video item; and
identifying an interaction by using the gradient and the boundary.

The method may further comprise
using a processor to determine a brightness of an area derived from the obj ect; and
identifying an interaction by using the brightness of the area and the boundary.

The interaction may be a person pushing the item.

The interaction may be a person touching the item.

The interaction may be a person deforming the item.

The interaction may be a person manipulating the item.

In some aspects, the invention may provides a system for detecting an object and generating an output in response, the system comprising
a first source, for outputing electromagnetic energy in a first wavelength range;
a detector for detecting a reflection of the first source of electromagnetic energy from an object;
a processor coupled to the detector for using the detected reflection to generate a display signal;
a second source, for outputing electromagnetic energy at a second wavelength range, wherein the second source generates a visible display in response to the display signal, wherein the first and second wavelength ranges are different; and
audio output for outputing audio.

Thus, the scope of the invention is to be determined solely by the appended claims.

## Claims

1. A system comprising:
a camera system (3, 20) operable to provide images of an object against a background;
a display system (7, 25) operable to render video images onto a surface; and
a processor (5) coupled to receive said images from said camera system and coupled to drive said display system, said processor operable to adapt to changes in said background by analyzing changes over time in images from said camera system,
wherein said camera system (3, 20) comprises a light source that is operable to be strobed, and
wherein said processor is further operable to process said images from said camera system (3, 20) based on said strobed light source.

2. A system in accordance with claim 1, wherein said processor is operable to adapt to changes in said background by generating an adaptive model of said background by analyzing changes over time in images from said camera system (3, 20).

3. A system in accordance with Claim 2, wherein said processor is further operable to generate said video images based on said adaptive model and said images from said camera system (3, 20).

4. A system in accordance with Claim 1, wherein at least a portion of said surface coincides with said background.

5. A system in accordance with Claim 1, wherein said processor (5) is further operable to detect said object and positions thereof.

6. A system in accordance with Claim 1, wherein said processor (5) is further operable to determine an influence image, wherein the influence image includes a region around an object image derived from the object.

7. A system in accordance with Claim 6, wherein said processor (5) is further operable to determine an interaction between the object and at least one of the video images based on the influence image.

8. A system in accordance with Claim 6, wherein said processor (5) is further operable to determine a gradient of the influence image and to determine interaction between the object and at least one of the video images based on the gradient.

9. A system in accordance with Claim 8, wherein said processor (5) is further operable to determine a brightness of the influence image and to determine interaction between the object and the at least one video image based on the brightness.

10. A system in accordance with Claim 6, wherein said processor (5) is further operable to determine a brightness of the influence image and to determine interaction between the object and at least one of the video images based on the brightness.

11. A system in accordance with Claim 1, wherein said processor (5) is further operable to determine a gradient of the object and to determine interaction between the object and at least one of the video images based on the gradient.

12. A system in accordance with Claim 1 or 11, wherein said processor (5) is further operable to determine a brightness of an area derived from the object and to determine interaction between the object and at least one video image based on the brightness.

13. A system in accordance with Claim 1, wherein said processor (5) is further operable to determine an interaction between the object and at least one of the video images.

14. A system in accordance with Claim 13, wherein said processor (5) is further operable to determine a strength of said interaction.

15. A system in accordance with Claim 14, wherein said processor (5) is further operable to determine a direction of said interaction.

16. A system in accordance with Claim 13, wherein said processor (5) is further operable to determine a direction of said interaction.

17. A system in accordance with Claim 13, wherein said interaction is one of:
the object pushing the at least one video image;
the object touching the at least one video image;
the object deforming the at least one video image; and
the object manipulating the at least one video image.

18. A system in accordance with Claim 1, wherein said processor (5) is further operable to detect a lighting phenomenon due to sources of light other than said camera system light source, such as a lighting phenomenon causing shadows.

19. The system as described in Claim 2 wherein said processor (5) is further operable to generate said adaptive model of said background by identifying pixels in frames having substantially constant brightness over time.

20. The system as described in Claim 2 or 19, wherein said processor (5) is further operable to generate said adaptive model of said background by computing median values over time for said pixels.

21. The system as described in Claim 2, wherein said processor (5) is further operable to generate said adaptive model of said background by incorporating into said adaptive model of said background changes in said background that occur due to changes in lighting affecting said background.

22. The system as described in Claim 2, wherein said processor (5) is further operable to classify pixels of said images as either foreground or background by comparing said images to video images based on said adaptative model.

23. The system as described in Claim 2, wherein said processor (5) is further operable to generate said adaptive model of said background by incorporating into said adaptive model of said background information relating to at least a portion of said object that has remained substantially stationary for a period of time.

24. The system as described in Claim 2, wherein said processor is further operable to generate said adaptive model of said background by computing a weighted average of a current image of said images from said camera system (3, 20) with video images based on said adaptive model of said background.

25. The system as described in Claim 24, wherein said processor is further operable to tune said weighted average to change a rate at which said model of said background adapts to changes in said images from said camera system (3, 20).

26. The system as described in Claim 2, wherein said processor (5) is further operable to generate said display item by distinguishing between foreground that corresponds to said object and said background.

27. The system as described in Claim 26, wherein said distinguishing comprises comparing a current image of said images from said camera system (3, 20) with video images based on said adaptive model of said background.

28. The system as described in Claim 27, wherein said distinguishing further comprises determining if differences between corresponding pixels in said current image of said images from said camera system (3, 20) and video images based on said adaptive model of said background are greater than a threshold to determine location of said object.

29. The system as described in Claim 1 wherein said camera system (3, 20) comprises two cameras to provide a stereo image, and wherein said processor is further operable to compute depth data based on said stereo image and to use said depth data to generate said model of said background.

## Patentansprüche

1. System, das Folgendes umfasst:
ein Kamerasystem (3,20), das Bilder eines Objekts gegen einen Hintergrund bereitstellen kann;
ein Anzeigesystem (7, 25), das Videobilder auf eine Oberfläche übertragen kann; und
einen Prozessor (5), der so gekoppelt ist, dass er die genannten Bilder von dem genannten Kamerasystem empfängt, und der so gekoppelt ist, dass er das genannte Anzeigesystem antreibt, wobei der genannte Prozessor Veränderungen des genannten Hintergrunds durch Analysieren von Veränderungen im Laufe der Zeit in den Bildern von dem genannten Kamerasystem anpassen kann,
wobei das genannte Kamerasystem (3, 20) eine Lichtquelle umfasst, die getaktet werden kann, und
wobei der genannte Prozessor ferner die genannten Bilder von dem genannten Kamerasystem (3, 20) basierend auf der genannten getakteten Lichtquelle verarbeiten kann.

2. System nach Anspruch 1, wobei der genannte Prozessor Veränderungen des genannten Hintergrunds durch Erzeugen eines adaptiven Modells des genannten Hintergrunds durch Analysieren von Veränderungen im Laufe der Zeit in den Bildern von dem genannten Kamerasystem (3, 20) anpassen kann.

3. System nach Anspruch 2, wobei der genannte Prozessor ferner die genannten Videobilder basierend auf dem genannten adaptiven Modell und den genannten Bildern von dem genannten Kamerasystem (3, 20) erzeugen kann.

4. System nach Anspruch 1, wobei mindestens ein Teil der genannten Oberfläche mit dem genannten Hintergrund übereinstimmt.

5. System nach Anspruch 1, wobei der genannte Prozessor (5) ferner das genannte Objekt und dessen Positionen erkennen kann.

6. System nach Anspruch 1, wobei der genannte Prozessor (5) ferner ein Einflussbild bestimmen kann, wobei das Einflussbild einen Bereich um ein Objektbild umfasst, das von dem Objekt abgeleitet wird.

7. System nach Anspruch 6, wobei der genannte Prozessor (5) ferner eine Wechselwirkung zwischen dem Objekt und mindestens einem der Videobilder basierend auf dem Einflussbild bestimmen kann.

8. System nach Anspruch 6, wobei der genannte Prozessor (5) ferner einen Gradienten des Einflussbildes bestimmen kann und eine Wechselwirkung zwischen dem Objekt und mindestens einem der Videobilder basierend auf dem Gradienten bestimmen kann.

9. System nach Anspruch 8, wobei der genannte Prozessor (5) ferner eine Helligkeit des Einflussbildes bestimmen kann, und eine Wechselwirkung zwischen dem Objekt und dem mindestens einen Videobild basierend auf der Helligkeit bestimmen kann.

10. System nach Anspruch 6, wobei der genannte Prozessor (5) ferner eine Helligkeit des Einflussbildes bestimmen kann, und eine Wechselwirkung zwischen dem Objekt und mindestens einem der Videobilder basierend auf der Helligkeit bestimmen kann.

11. System nach Anspruch 1, wobei der genannte Prozessor (5) ferner einen Gradienten des Objekts bestimmen kann und eine Wechselwirkung zwischen dem Objekt und mindestens einem der Videobilder basierend auf dem Gradienten bestimmen kann.

12. System nach Anspruch 1 oder 11, wobei der genannte Prozessor (5) ferner eine Helligkeit eines Bereichs bestimmen kann, der von dem Objekt abgeleitet wurde, und eine Wechselwirkung zwischen dem Objekt und mindestens einen Videobild basierend auf der Helligkeit bestimmen kann.

13. System nach Anspruch 1, wobei der genannte Prozessor (5) ferner eine Wechselwirkung zwischen dem Objekt und mindestens einem der Videobilder bestimmen kann.

14. System nach Anspruch 13, wobei der genannte Prozessor (5) ferner eine Stärke der genannten Interaktion bestimmen kann.

15. System nach Anspruch 14, wobei der genannte Prozessor (5) ferner eine Richtung der genannten Interaktion bestimmen kann.

16. System nach Anspruch 13, wobei der genannte Prozessor (5) ferner eine Richtung der genannten Interaktion bestimmen kann.

17. System nach Anspruch 13, wobei die genannte Interaktion eines von Folgendem ist:
das Objekt drückt das mindestens eine Videobild;
das Objekt berührt das mindestens eine Videobild;
das Objekt verformt das mindestens eine Videobild und
das Objekt manipuliert das mindestens eine Videobild.

18. System nach Anspruch 1, wobei der genannte Prozessor (5) ferner ein Beleuchtungsphänomen aufgrund von Lichtquellen erfassen kann, die sich von der genannten Lichtquelle des Kamerasystems unterscheiden, wie beispielsweise ein Beleuchtungsphänomen, das Schatten verursacht.

19. System nach Anspruch 2, wobei der genannte Prozessor (5) ferner das genannte adaptive Modell des genannten Hintergrunds erzeugen kann, indem er Pixel in den Einzelbildern identifiziert, die im Verlauf der Zeit im Wesentlichen eine konstante Helligkeit aufweisen.

20. System nach Anspruch 2 oder 19, wobei der genannte Prozessor (5) ferner das genannte adaptive Modell des genannten Hintergrunds erzeugen kann, indem er Mittelwerte im Verlauf der Zeit für die genannten Pixel berechnet.

21. System nach Anspruch 2, wobei der genannte Prozessor (5) ferner das genannte adaptive Modell des genannten Hintergrunds erzeugen kann, indem er in das genannte adaptive Modell des genannten Hintergrundes Veränderungen des genannten Hintergrundes einfügt, die aufgrund von Veränderungen der Beleuchtung auftreten, die den genannten Hintergrund beeinflussen.

22. System nach Anspruch 2, wobei der genannte Prozessor (5) ferner Pixel der genannten Bilder entweder als Vordergrund oder Hintergrund klassifizieren kann, indem er die genannten Bilder mit Videobildern basierend auf dem genannten adaptativen Modell vergleicht.

23. System nach Anspruch 2, wobei der genannte Prozessor (5) ferner das genannte adaptive Modell des genannten Hintergrunds erzeugen kann, indem er in das genannte adaptive Modell des genannten Hintergrundes Informationen in Bezug auf mindestens einen Abschnitt des genannten Objekts einfügt, der für eine Zeitdauer im Wesentlichen stationär geblieben ist.

24. System nach Anspruch 2, wobei der genannte Prozessor ferner das genannte adaptive Modell des genannten Hintergrunds erzeugen kann, indem er einen gewichteten Mittelwert eines aktuellen Bildes der genannten Bilder von dem genannten Kamerasystem (3, 20) mit Videobildern berechnet, die auf dem genannten adaptiven Modell des genannten Hintergrunds basieren.

25. System nach Anspruch 24, wobei der genannte Prozessor ferner den genannten gewichteten Mittelwert zur Änderung einer Rate abstimmen kann, mit der sich genannte Modell des genannten Hintergrundes an Veränderungen der genannten Bilder von dem genannten Kamerasystem (3, 20) anpasst.

26. System nach Anspruch 2, wobei der genannte Prozessor (5) ferner das genannte Anzeigeelement erzeugen kann, indem er zwischen dem Vordergrund, der dem genannten Objekt entspricht, und dem genannten Hintergrund unterscheidet.

27. System nach Anspruch 26, wobei die genannte Unterscheidung das Vergleichen eines aktuellen Bildes der genannten Bilder von dem genannten Kamerasystem (3, 20) mit Videobildern basierend auf dem genannten adaptiven Modell des genannten Hintergrunds umfasst.

28. System nach Anspruch 27, wobei die genannte Unterscheidung ferner das Bestimmen umfasst, ob Differenzen zwischen entsprechenden Pixeln in dem genannten aktuellen Bild der genannten Bilder von dem genannten Kamerasystem (3, 20) und Videobildern, die auf dem genannten adaptiven Modell des genannten Hintergrunds basieren, größer sind als ein Schwellenwert, um die Lage des genannten Objekts zu bestimmen.

29. System nach Anspruch 1, wobei das genannte Kamerasystem (3, 20) zwei Kameras umfasst, um ein Stereobild bereitzustellen, und wobei der genannte Prozessor ferner Tiefendaten basierend auf dem genannten Stereobild berechnen kann und die genannten Tiefendaten verwenden kann, um das genannte Modell des genannten Hintergrunds zu erzeugen.

## Revendications

1. Système comprenant :
un système à caméra (3, 20) exploitable de façon à procurer des images d'un objet contre un arrière-plan ;
un système d'affichage (7, 25) exploitable de façon à assurer le rendu d'images vidéo sur une surface ; et
un processeur (5) couplé de façon à recevoir lesdites images à partir dudit système à caméra et couplé de façon à commander ledit système d'affichage, ledit processeur étant exploitable de façon à s'adapter à des changements dans ledit arrière-plan grâce à l'analyse de changements dans le temps pour des images provenant dudit système à caméra,
cas dans lequel ledit système à caméra (3, 20) comporte une source lumineuse qui est exploitable pour être strobée, et
cas dans lequel ledit processeur est exploitable en outre de façon à traiter lesdites images provenant dudit système à caméra (3, 20) sur la base de ladite source lumineuse strobée.

2. Système selon la revendication 1, ledit processeur étant exploitable de façon à s'adapter à des changements dans ledit arrière-plan grâce à la génération d'un modèle adaptatif dudit arrière-plan suite à l'analyse de changements dans le temps pour des images provenant dudit système à caméra (3, 20).

3. Système selon la revendication 2, ledit processeur étant exploitable en outre de façon à générer lesdites images vidéo basées sur ledit modèle adaptatif et lesdites images provenant dudit système à caméra (3, 20).

4. Système selon la revendication 1, au moins une portion de ladite surface coïncidant avec ledit arrière-plan.

5. Système selon la revendication 1, ledit processeur (5) étant exploitable en outre de façon à détecter ledit objet et les positions de celui-ci.

6. Système selon la revendication 1, ledit processeur (5) étant exploitable en outre de façon à déterminer une image d'influence, cas dans lequel l'image d'influence inclut une région autour d'une image-objet dérivée à partir de l'objet.

7. Système selon la revendication 6, ledit processeur (5) étant exploitable en outre de façon à déterminer une interaction entre l'objet et au moins l'une des images vidéo sur la base de l'image d'influence.

8. Système selon la revendication 6, ledit processeur (5) étant exploitable en outre de façon à déterminer un gradient de l'image d'influence, et à déterminer une interaction entre l'objet et au moins l'une des images vidéo sur la base du gradient.

9. Système selon la revendication 8, ledit processeur (5) étant exploitable en outre de façon à déterminer une luminosité de l'image d'influence, et à déterminer une interaction entre l'objet et ladite au moins une image vidéo sur la base de la luminosité.

10. Système selon la revendication 6, ledit processeur (5) étant exploitable en outre de façon à déterminer une luminosité de l'image d'influence, et à déterminer une interaction entre l'objet et au moins l'une des images vidéo sur la base de la luminosité.

11. Système selon la revendication 1, ledit processeur (5) étant exploitable en outre de façon à déterminer un gradient de l'objet, et à déterminer une interaction entre l'objet et au moins l'une des images vidéo sur la base du gradient.

12. Système selon la revendication 1 ou 11, ledit processeur (5) étant exploitable en outre de façon à déterminer une luminosité d'une zone dérivée à partir de l'objet, et à déterminer une interaction entre l'objet et au moins une image vidéo sur la base de la luminosité.

13. Système selon la revendication 1, ledit processeur (5) étant exploitable en outre de façon à déterminer une interaction entre l'objet et au moins l'une des images vidéo.

14. Système selon la revendication 13, ledit processeur (5) étant exploitable en outre de façon à déterminer une intensité de ladite interaction.

15. Système selon la revendication 14, ledit processeur (5) étant exploitable en outre de façon à déterminer un sens de ladite interaction.

16. Système selon la revendication 13, ledit processeur (5) étant exploitable en outre de façon à déterminer un sens de ladite interaction.

17. Système selon la revendication 13, ladite interaction étant l'une des actions suivantes :
l'objet poussant ladite au moins une image vidéo ;
l'objet touchant ladite au moins une image vidéo ;
l'objet déformant ladite au moins une image vidéo ; et
l'objet manipulant ladite au moins une image vidéo.

18. Système selon la revendication 1, ledit processeur (5) étant exploitable en outre de façon à détecter un phénomène lumineux dû à des sources de lumière lesquelles sont différentes de ladite source lumineuse du système à caméra, par exemple un phénomène lumineux qui cause des ombres.

19. Système tel qu'il est énoncé à la revendication 2, ledit processeur (5) étant exploitable en outre de façon à générer ledit modèle adaptatif dudit arrière-plan grâce à l'identification de pixels dans des trames possédant une luminosité sensiblement constante dans le temps.

20. Système tel qu'il est énoncé à la revendication 2 ou 19, ledit processeur (5) étant exploitable en outre de façon à générer ledit modèle adaptatif dudit arrière-plan grâce au calcul de valeurs médianes dans le temps pour lesdits pixels.

21. Système tel qu'il est énoncé à la revendication 2, ledit processeur (5) étant exploitable en outre de façon à générer ledit modèle adaptatif dudit arrière-plan grâce à l'incorporation, dans ledit modèle adaptatif dudit arrière-plan, de changements dans ledit arrière-plan qui surviennent en raison de changements dans l'éclairage qui affecte ledit arrière-plan.

22. Système tel qu'il est énoncé à la revendication 2, ledit processeur (5) étant exploitable en outre de façon à classer les pixels desdites images, soit en tant que premier plan soit en tant qu'arrière-plan, grâce à la comparaison desdites images à des images vidéo basées sur ledit modèle adaptatif.

23. Système tel qu'il est énoncé à la revendication 2, ledit processeur (5) étant exploitable en outre de façon à générer ledit modèle adaptatif dudit arrière-plan grâce à l'incorporation, dans ledit modèle adaptatif dudit arrière-plan, d'informations relatives à au moins une portion dudit objet lequel est resté sensiblement stationnaire pendant un certain intervalle de temps.

24. Système tel qu'il est énoncé à la revendication 2, ledit processeur étant exploitable en outre de façon à générer ledit modèle adaptatif dudit arrière-plan grâce au calcul d'une moyenne pondérée d'une image actuelle parmi lesdites images provenant dudit système à caméra (3, 20) avec des images vidéo basées sur ledit modèle adaptatif dudit arrière-plan.

25. Système tel qu'il est énoncé à la revendication 24, ledit processeur étant exploitable en outre de façon à accorder ladite moyenne pondérée de façon à changer une cadence à laquelle ledit modèle dudit arrière-plan s'adapte à des changements dans lesdites images provenant dudit système à caméra (3, 20).

26. Système tel qu'il est énoncé à la revendication 2, ledit processeur (5) étant exploitable en outre de façon à générer ledit article d'affichage grâce à la distinction entre un premier plan lequel correspond audit objet et ledit arrière-plan.

27. Système tel qu'il est énoncé à la revendication 26, ladite distinction comprenant l'opération consistant à comparer une image actuelle parmi lesdites images provenant dudit système à caméra (3, 20) avec des images vidéo basées sur ledit modèle adaptatif dudit arrière-plan.

28. Système tel qu'il est énoncé à la revendication 27, ladite distinction comprenant en outre l'opération consistant à déterminer si des différences, entre des pixels correspondants dans ladite image actuelle parmi lesdites images provenant dudit système à caméra (3, 20) et des images vidéo basées sur ledit modèle adaptatif dudit arrière-plan, sont plus élevées qu'un certain seuil afin de déterminer l'emplacement dudit objet.

29. Système tel qu'il est énoncé à la revendication 1, ledit système à caméra (3, 20) comprenant deux caméras afin de procurer une image stéréo, et cas dans lequel ledit processeur est exploitable en outre de façon à calculer des données de profondeur sur la base de ladite image stéréo et à utiliser lesdites données de profondeur pour générer ledit modèle dudit arrière-plan.
